# EUROPÄISCHE PATENTSCHRIFT

(11) **EP 2 425 124 B1**
(45) Veröffentlichungstag und Bekanntmachung des Hinweises auf die Patenterteilung: **27.03.2013**
(21) Anmeldenummer: 10718061.4
(22) Anmeldetag: 31.03.2010
(51) Int. Cl.: F03B 17/06, F03B 13/26

(54) **UNTERWASSERKRAFTWERK MIT EINER BIDIREKTIONAL ANSTRÖMBAREN, GLEICHSINNIG UMLAUFENDEN WASSERTURBINE**
UNDERWATER POWER PLANT COMPRISING A WATER TURBINE WITH BIDIRECTIONAL FLUID FLOW AND UNIDIRECTIONAL ROTATION
CENTRALE ÉLECTRIQUE IMMERGÉE ÉQUIPÉE D'UNE TURBINE HYDRAULIQUE TOURNANT DANS LE MÊME SENS ET À ÉCOULEMENT BIDIRECTIONNEL

(30) Priorität: 27.04.2009 DE 102009018758
(43) Veröffentlichungstag der Anmeldung: 07.03.2012
(73) Patentinhaber: Voith Patent GmbH, 89522 Heidenheim (DE)
(72) Erfinder: ARLITT, Raphael, 89077 Ulm (DE); WEILEPP, Jochen, 89522 Heidenheim (DE)
(74) Vertreter: Dr. Weitzel & Partner
(86) Internationale Anmeldenummer: PCT/EP2010/002059
(87) Internationale Veröffentlichungsnummer: WO 2010/124778

(56) Entgegenhaltungen:
- EP-A2- 2 177 749
- WO-A1-2009/031887
- GB-A- 2 392 713
- JP-A- 60 098 103
- JP-A- 63 219 801

## Beschreibung

Die Erfindung betrifft ein Unterwasserkraftwerk mit einer bidirektional anströmbaren, gleichsinnig umlaufenden Wasserturbine, insbesondere einer Wellsturbine, und einem Verfahren zu dessen Betrieb, wobei das Unterwasserkraftwerk vorzugsweise zur Ausnutzung einer Gezeitenströmung dient. Gegenstand einer Weiterführung der Erfindung ist eine bidirektionale Luftturbine.

Freistehend in einer Umgebungsströmung platzierte Unterwasserkraftwerke stellen eine kostengünstige Variante für die Energiegewinnung aus einer Meeresströmung, insbesondere einer Gezeitenströmung, dar. Bekannt sind propellerförmig ausgestaltete Wasserturbinen, die an einer Maschinengondel umlaufen, welche im Inneren einen elektrischen Generator aufnimmt. Für eine alternative Gestaltung wird der elektrische Generator an der radial äußeren Peripherie der Wasserturbine angeordnet, das heißt die umlaufende Einheit der Wasserturbine umfasst einen Generatorläufer, der gegenüber den Turbinenblättern der Wasserturbine radial außen liegt und in einer ringförmigen Stützstruktur umläuft.

Zur effizienten Ausnutzung einer bezüglich der Anströmungsrichtung zyklisch wechselnden Gezeitenströmung kann die Wasserturbine mit der Strömung nachgeführt werden, typischerweise wird die gesamte Gondel eines Unterwasserkraftwerks mit der Turbine-Generator-Einheit in die Strömung gedreht. Eine solche Ausgestaltung ist konstruktiv aufwändig und zieht nach sich, dass das vom elektrischen Generator ausgehende Verbindungskabel gegen eine Verdrillung zu schützen ist. Für einen alternativen Ansatz sind die Rotorblätter mit einem aktiven Blattwinkelverstellmechanismus ausgestattet, der eine Drehung des Blattprofils um 180° ermöglicht. Allerdings folgt hieraus ein hoher konstruktiver Aufwand zur Anlenkung der Blätter. Ferner besteht die Notwendigkeit, zur Steuerung des aktiven Blattwinkelverstellmechanismus externe Sensoren zu verwenden, die das Einsetzen einer Richtungsumkehr der Anströmung detektieren. Aus diesem Grund wurde vorgeschlagen, für eine robuste und einfache Gestaltung einer bidirektional anströmbaren Wasserturbine symmetrische Turbinenblätter einzusetzen. Dabei werden durch die CH 316900 linsenförmige, doppeltsymmetrische Blattprofile offenbart. Alternativ können Profile verwendet werden, deren Skelettlinie einen S-Schlag ausführt. Hierzu wird beispielhaft auf die US 6116856A verwiesen.

Die voranstehend angeführten symmetrischen Profile erlauben, eine sich umkehrende Strömungsrichtung auszunutzen, wobei eine Änderung der Anströmungsrichtung mit einem Wechsel der Umlaufrichtung der Wasserturbine verbunden ist. Als Alternative kann für eine zur Profilsehne symmetrische Gestaltung der Profile der Turbinenblätter mit einer Ausrichtung der Profilsehnen parallel zur Rotationsebene bei einem Richtungswechsel der Anströmung der Umlaufsinn beibehalten werden. Derartige Wellsturbinen sind aus der US 4,313,711 bekannt. Ferner schlägt die EP 1 430 220 B1 die Verwendung einer ein- oder mehrstufigen Wellsturbine in einem Strömungskanal zur Energiegewinnung aus einer Gezeitenströmung vor.

Zur Verbesserung der Anströmungsverhältnisse an den Turbinenblättern sind stromaufwärts und stromabwärts der Wasserturbine Leitschaufeln vorgesehen, die zusätzlich zur Abstützung der zentralen Nabe verwendet werden, welche der Lagerung der Wasserturbine dient. Neben der konstruktiv aufwendigen Gestaltung für den Leitapparat besteht eine weitere Schwierigkeit darin, eine Anpassung an unterschiedliche Anströmungsgeschwindigkeiten oder eine Strömung mit schnellen Geschwindigkeitsfluktuationen vorzunehmen. Dabei besteht bei einer sich schnell verändernden Anströmungsgeschwindigkeit als Folge von Turbulenzen die Gefahr eines Strömungsabrisses an den Turbinenblättern, da eine Anpassung der Umlaufgeschwindigkeit der Wasserturbine vielfach nicht hinreichend schnell erfolgen kann. Eine weitere Schwierigkeit bei der Verwendung von Wellsturbinen, auch solchen, die mit einem Leitapparat ausgestattet sind, besteht darin, dass ein effizienter Betrieb eine hohe Umlaufdrehzahl voraussetzt, die zunächst den motorischen Betrieb des elektrischen Generators voraussetzt.

Zur Verbesserung von Wellsturbinen wird durch die GB 2100810 A vorgeschlagen, die einzelnen Turbinenblätter mit einem tellerförmigen Fußteil teilbeweglich an der Nabe der umlaufenden Einheit zu befestigen. Dabei ist der Drehpunkt des Fußpunkts an der Nabe seitlich versetzt zur Rotationsebene der Turbinenblätter auf der Höhe der angeströmten Profilnasen angeordnet. Gegenüberliegend und ebenfalls zur Rotationsebene seitlich versetzt ist eine Anschlagsvorrichtung in Form einer Langlochführung angelegt. Durch diese Maßnahme können die Rotorblätter eine beschränkte Winkelstellung relativ zur Rotationsebene für kleine Schnelllaufzahlen annehmen. Beim Betrieb einer solchermaßen gestalteten Wellsturbine in einem Unterwasserkraftwerk tritt die Schwierigkeit auf, dass aufgrund der höheren Dichte des antreibenden Mediums und einer gegenüber dem Betrieb als Luftturbine geringeren Rotationsgeschwindigkeit im Normalbetrieb, die Turbinenblätter ständig eine Winkelstellung gegen die Rotationsebene einnehmen. Weitere Ausführungen mit beweglich befestigten Turbinenblättern sind aus GB 2 392 713 A, JP 60 098 103 A und JP 63 219 801 A bekannt. Ferner ist in der US 2005271508 A als Verbesserungsvorschlag für Wellsturbinen offenbart, die Turbinenblätter mit wenigstens teilflexiblen Profilen auszubilden. Beim Betrieb deformieren sich die Turbinenblätter im Sinne quer angeströmter Flossen. Nachteilig an solchermaßen flexibel ausgebildeten Strukturen sind Materialermüdungseffekte, die aufgrund eines ständig wechselnden Deformationsgrads der Turbinenblätter resultieren. Darüber hinaus tritt auch bei dieser Gestaltung die voranstehend genannte Schwierigkeit unerwünscht starker Deformation bei der Verwendung derartiger Turbinen für Gezeitenkraftwerke auf.

Der Erfindung liegt die Aufgabe zugrunde, ein Unterwasserkraftwerk mit einer bidirektional anströmbaren, gleichsinnig umlaufenden Wasserturbine so zu gestalten, dass die voranstehend dargelegten Probleme überwunden werden. Dabei sollte insbesondere ein Betrieb bei geringen Anströmungsgeschwindigkeiten oder hohen Geschwindigkeitsfluktuationen in der Anströmung möglich sein. Des Weiteren ist die Wasserturbine so auszubilden, dass der zugeordnete Leitapparat konstruktiv vereinfacht gestaltet oder gänzlich weggelassen werden kann. Gleichzeitig sollte die Wasserturbine auch bei kleinen Schnelllaufzahlen nicht zu einem Strömungsabriss neigen und bezüglich ihres Anlaufverhaltens verbessert sein. Ferner soll das Turbinendesign auf eine bidirektional anströmbare Luftturbine, insbesondere für ein OWC-Wellenkraftwerk übertragbar sein.

Die der Erfindung zugrunde liegende Aufgabe wird durch die Merkmale des unabhängigen Anspruchs gelöst. Dabei haben die Erfinder erkannt, dass einer gattungsgemäßen Turbine eines Unterwasserkraftwerks ein passiver Blattwinkelverstellmechanismus mit einer Schwenkachse zuzuordnen ist, die auf der Profilsehne zwischen der anstromseitigen Profilnase und der Auffädellinie der hydrodynamischen Zentren liegt. Durch diese Maßnahme stellt sich in Abhängigkeit der an den Turbinenblättern angreifenden hydrodynamischen Kraft und der Fliehkraft ein bestimmter Winkel gegen die Rotationsebene ein. Entsprechend wird sich das Turbinenblatt bei großen hydrodynamischen Kräften und bei kleiner Schnelllaufzahl aus der Rotorebene heraus in Richtung der Fahnenstellung bewegen. Unter der Fahnenstellung wird verstanden, dass ein Winkel zwischen der Profilsehne und der Rotationsebene eintritt, der im Wesentlichen den Anstellwinkel des Profils gegen die effektive Anströmung zu Null führt.

Die Schwenkachse des passiven Blattwinkelverstellmechanismus kann konstruktiv entweder durch eine schwenkbare Anlenkung des Turbinenblatts an der umlaufenden Einheit der Wasserturbine definiert werden oder das Blatt wird torsionselastisch gestaltet, wobei die Aussteifungen des Turbinenblatts eine Torsionsachse festlegen, die gegenüber der Auffädellinie der hydrodynamischen Zentren stromaufwärts zur angeströmten Profilnase hin verlagert ist.

Für ein solchermaßen gestaltetes Turbinenblatt erzeugt die am hydrodynamischen Zentrum des jeweiligen Profilschnitts angreifende hydrodynamische Kraft ein aufschwenkendes Moment, das durch Fliehkräfte und elastische Rückstellkräfte ausbalanciert wird. Letztere können entweder im Turbinenblatt selbst erzeugt werden, dies ist insbesondere bei einem torsionselastisch ausgestalteten Turbinenblatt der Fall, oder im Fußpunkt eines schwenkbar an einer Stützstruktur angelenkten Turbinenblatts ist eine Vorrichtung vorgesehen, die gegen ein Aufschwenken des Blatts gerichtete, elastische Kräfte bewirkt. Im einfachsten Fall ist ein System aus rückstellenden Federn denkbar.

Durch den passiven Blattwinkelverstellmechanismus ist in Abhängigkeit der jeweils vorliegenden Schnelllaufzahl ein vorbestimmtes Aufschwenken des Turbinenblatts aus der Rotationsebene heraus möglich. Dies verringert die für den effizienten Betrieb notwendigen Umlaufgeschwindigkeiten der gattungsgemäßen Wasserturbine und führt bereits für den Normalbetrieb zu einer Steigerung des Wirkungsgrads. Zusätzlich schafft die Verkleinerung des stromaufwärtigen beziehungsweise stromabwärtigen Leitapparats eine weitere Effizienzsteigerung. Darüber hinaus erlaubt der passive Blattwinkelverstellmechanismus eine Erweiterung des Arbeitsbereichs, wobei für eine fluktuierende Anströmung ein Strömungsabriss hinausgezögert wird. Des Weiteren erlaubt die aufgeschwenkte Stellung der Turbinenblätter eine Vereinfachung des Anlaufens, so dass beim Anlagenstart der Übergang vom motorischen Antrieb mittels des elektrischen Generators zum Antrieb durch die hydrodynamischen Kräfte an der Wasserturbine früher erfolgen kann. Zusätzlich kann durch ein hinreichend weites Aufschwenken der Turbinenblätter in Richtung der Fahnenstellung eine Abregelung der Anlage beim Erreichen der Nennleistung bewirkt werden.

Für eine Weitergestaltung der Erfindung wird zur Beeinflussung des Anstellwinkels der Turbinenblätter eine Geschwindigkeitsführung der Wasserturbine vorgesehen, die durch den elektrischen Generator bewirkt wird. Alternativ kann durch den elektrischen Generator ein Lastmoment vorgegeben werden. Besonders bevorzugt wird die Regelung beziehungsweise die Steuerung des Generators ohne eine störanfällige äußere Sensorik und ohne den Rückgriff auf Kennlinien ausgeführt. Stattdessen wir eine Suche des Maximums der vom elektrischen Generator abgegebenen Ausgangsleistung bewirkt. Besonders bevorzugt wird hierfür ein MPP-Regler (Maximum Power Point - MPP) verwendet. Dieser gibt eine Stellgröße für den direkt mit der Wasserturbine verbundenen elektrischen Generator mit einer zeitlichen Variation aus. Dies ist entweder die vom elektrischen Generator eingeprägte Umlaufgeschwindigkeit oder das an die Wasserturbine weitergegebene, vom elektrischen Generator bewirkte Lastmoment. Hierdurch resultiert eine Leistungsschwankung, durch die ein Leistungsgradient ermittelt werden kann, auf dessen Grundlage das Suchverfahren für die Leistungsmaximierung beruht. Dabei wird Insbesondere eine Drehzahlführung der Wasserturbine erwünscht, da hierdurch eine Anpassung der Schnelllaufzahl und damit eine Einflussnahme auf die mittels des passiven Blattwinkelverstellmechanismus bewirkte Stellung der Turbinenblätter möglich ist.

Erfindungsgemäß ist vorgesehen, den Grad des Aufschwenkens in den radial äußeren Bereichen der Turbinenblätter gegenüber den radial inneren Bereichen zu verändern, insbesondere zu verringern. Aufgrund der radiusabhängigen Umfangsgeschwindigkeit ist der Winkel der effektiven Anströmung gegen die Rotationsebene größer an den radial inneren Bereichen des Turbinenblatts. Entsprechend ist in diesem Bereich ein stärkeres Aufschwenken im Vergleich zu den Turbinenblattspitzen notwendig. Für eine Ausgestaltungsvariante ist daher vorgesehen, die Turbinenblätter von einem äußeren Tragring ausgehend mit einer radial innen gerichteten Erstreckung auszubilden und zugleich die Turbinenblätter entweder mehrsegmentig oder torsionselastisch auszubilden. Die zugeordnete Schwenkachse liegt wiederum zwischen der angestrebten Profilnase und der Auffädellinie der hydrodynamischen Zentren.

Im Falle einer torsionselastischen Ausgestaltung sind Aussteifungselemente im Profil vorgesehen, die die Torslonsachse festlegen. Entsprechend der in der Anmeldung verwendeten Terminologie entsteht damit eine definierte Schwenkachse. Für eine mehrsegmentige Ausgestaltung bilden die einzelnen Segmente radiale Abschnitte des Turbinenblatts, die jeweils gegeneinander um eine Schwenkachse drehbar sind, wobei die Möglichkeit besteht, den maximalen Schwenkwinkel zwischen zwei aufeinander folgenden Segmenten durch geeignet ausgeführte Anschlagselemente zu begrenzen.

Des Weiteren ist eine Ausgestaltung denkbar, für die die erfindungsgemäß gestalteten Turbinenblätter an einer radial äußeren Felge und einer radial inneren Nabe befestigt sind, wobei radial außen das Turbinenblatt im Vergleich zum radial inneren Teil nicht oder nur bis zu einem geringeren Schwenkwinkel ausschwenkbar ist. Eine Möglichkeit besteht in einer torsionselastischen Gestaltung des Turbinenblatts mit einer starren Befestigung des Turbinenblatts an der radial äußeren Felge, so dass die Profile dort bezüglich ihrer Profilsehnen in der Rotationsebene liegen. Wird ein solchermaßen gestaltetes Blatt radial innen an der Nabe schwenkbar angelenkt, entsteht eine stabile Führung und zugleich das gewünschte radiusabhängige Aufschwenken der Turbinenblätter.

Für eine Weiterführung wird die Ausführung mit einem radiusabhängigen Schwenkwinkel auf eine Luftturbine übertragen, die insbesondere für die Verwendung in einem OWC-Wellenkraftwerk vorgesehen ist. Entsprechend umfasst die Luftturbine eine Vielzahl von Turbinenblättern, die über wenigstens einen Teil ihrer Längserstreckung ein tropfenförmiges Profil aufweisen, wobei die Luftturbine bei bidirektionaler Anströmung gleichsinnig umläuft. Erfindungsgemäß ist ein passiver Blattwinkelverstellmechanismus für die Turbinenblätter vorgesehen, wobei jedem Turbinenblatt eine Schwenkachse zugeordnet ist, die zwischen der angeströmten Profilnase und der Auffädellinie der aerodynamischen Zentren liegt, und wobei im Betrieb der Aufschwenkwinkel in den radial äußeren Bereichen des Turbinenblatts kleiner ist im Vergleich zu den radial inneren Bereichen.

Nachfolgend wird die Erfindung anhand von Ausführungsbeispielen in Verbindung mit Figurendarstellungen erläutert. In diesen ist im Einzelnen Folgendes dargestellt:
- Figur 1: zeigt als axiale Teilschnittansicht ein Unterwasserkraftwerk mit einer zweistufig angelegten Wellsturbine, die einen passiven Blattwinkelverstellmechanismus umfasst.
- Figur 2: zeigt einen vergrößerten Teilausschnitt aus Figur 1.
- Figur 3: zeigt einen Axialschnitt in der Rotationsebene für ein schwenkbar angelenktes Turbinenblatt.
- Figur 4: zeigt den Schnitt A-A aus Figur 3
- Figuren 5a - 5d: zeigen Profilschnitte zur Figur 6.
- Figur 6: zeigt ein von einem äußeren Tragring nach radial innen gerichtete, torsionselastisch ausgebildete Turbinenblätter.
- Figuren 7a - 7c: zeigen Profilschnitte aus Figur 8.
- Figur 8: zeigt ein segmentiert ausgebildetes Turbinenblatt, wobei die Einzelsegmente jeweils drehbar angelenkt sind.
- Figur 9: zeigt ein Ausgestaltungsbeispiel einer zweistufigen Wasserturbine mit radial innen drehbar angelenkten Turbinenblättern, die radial außen mittels eines Außenrings drehstarr geführt sind.

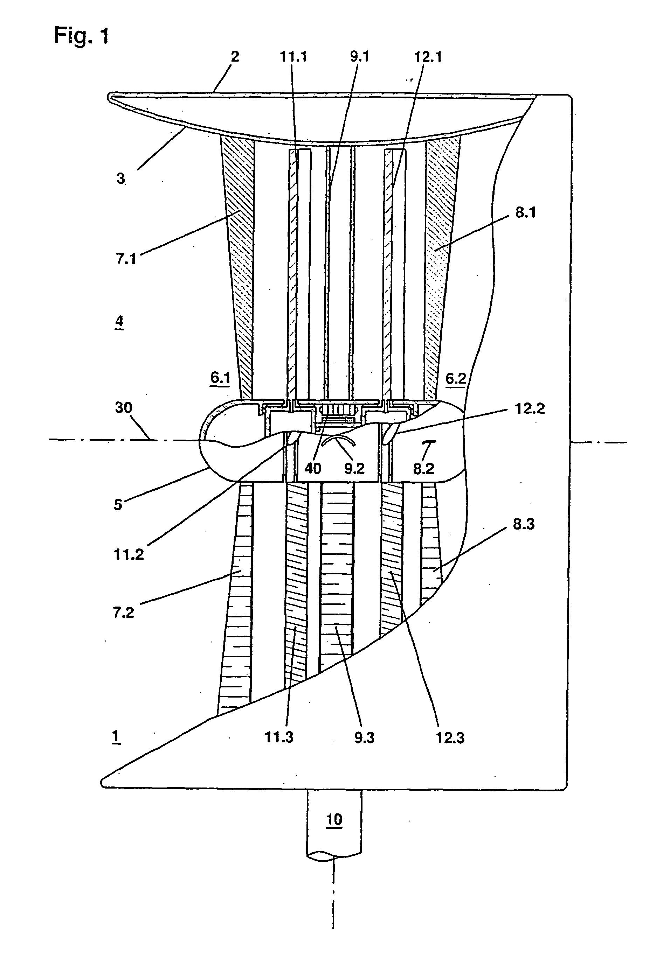

Figur 1 zeigt ein Unterwasserkraftwerk 1 in Teilschnittansicht. Für die dargestellte Ausgestaltung wird ein äußeres Gehäuse 2 verwendet, das von einer Stützstruktur 10 getragen wird. Alternativ sind Ausführungen denkbar, die ohne eine Stützstruktur 10 durch Auftriebselemente, insbesondere im äußeren Gehäuse 2, schwimmfähig ausgebildet sind.

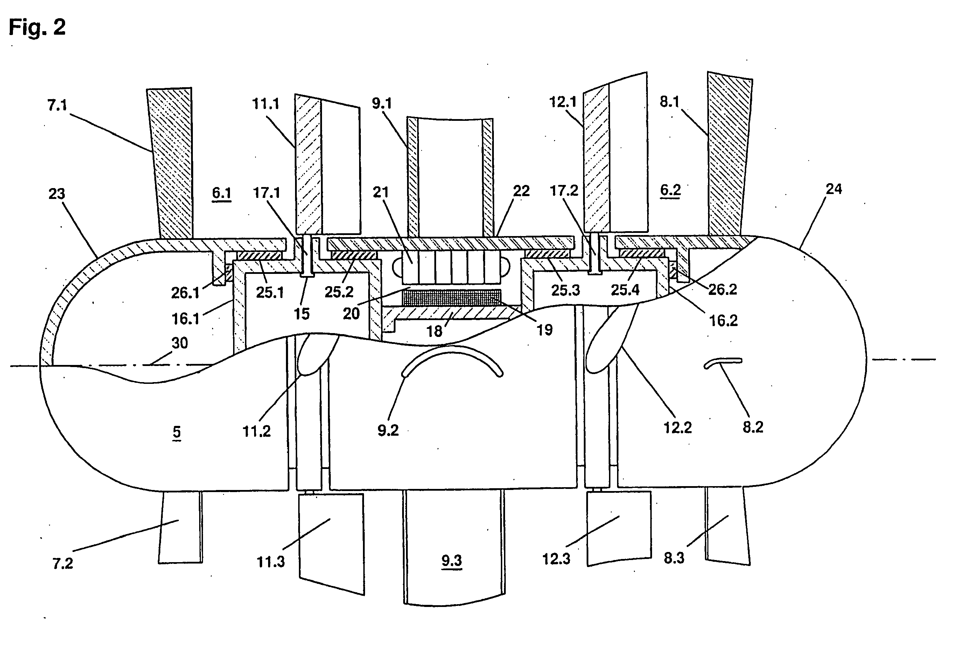

Die Innenwand 3 des äußeren Gehäuses 2 bildet einen Strömungskanal 4, wobei die Innenwand 3 bevorzugt als Konfusor/Diffusor-Kombination zur Strömungsbeschleunigung gestaltet ist, Innerhalb des Gehäuses 2 befindet sich ein Zentralelement 5, in dem die Lagerung der Wasserturbinen und der elektrische Generator 40 angeordnet sind. Dies wird nachfolgend im Detail im Zusammenhang mit Figur 2 erläutert.

Ferner stellt Figur 1 ein Unterwasserkraftwerk mit einer ersten Turbinenstufe 6.1 und einer zweiten Turbinenstufe 6.2 dar. Dabei umfasst die erste Turbinenstufe 6.1 die Leitschaufeln der ersten Stufe 7.1, 7.2 sowie die Turbinenblätter der ersten Stufe 11.1, 11.2. 11.3. Entsprechend umfasst die zweite Turbinenstufe 6.2 die Leitschaufeln der zweiten Stufe 8.1, 8.2, 8.3 und die Turbinenblätter der zweiten Stufe 12.1, 12.2. Beiden Turbinenstufen 6.1, 6.2 sind die Schaufeln des zentralen Leitapparats, 9.1, 9.2, 9.3 zugeordnet, die zwischen den Turbinenblättern der ersten Stufe 11.1, 11.2 und den Turbinenblättern der zweiten Stufe 12.1, 12.2, 12.3 angeordnet sind und die dazu dienen, in der zweistufigen Anordnung den Drall, der von den Turbinenblättern der jeweils vorausgehenden Stufe erzeugt wird, zu reduzieren, so dass die Turbinenblätter beider Stufen möglichst übereinstimmend angeströmt werden.

Der passive Blattwinkelverstellmechanismus wird nachfolgend anhand von Figur 2 erläutert, die einen vergrößerten Ausschnitt von Figur 1 im Bereich des Zentralelements 5 darstellt. Dabei werden für übereinstimmende Komponenten die gleichen Bezugszeichen verwendet.

Aus der Teilschnittansicht des Zentralelements 5 ist ersichtlich, dass die Turbinenblätter der ersten Stufe 11.1, 11.2, 11.3 drehbar an einer ersten Nabe 16.1 befestigt sind. Hierzu ist für das Turbinenblatt der ersten Stufe 11.1 ein erster Achsstutzen 17.1 skizziert, der radial innen der hohl ausgebildeten ersten Nabe 16.1 mit einem Verriegelungselement 15 abschließt. Entsprechend ist das Turbinenblatt der zweiten Stufe 12.1 an einer zweiten Nabe 16.2 mittels des zweiten Achsstutzes 17.2 schwenkbar befestigt.

Die erste Nabe 16.1 und die zweite Nabe 16.2 sind über den Maschinenträger 18 verbunden und bilden eine gleichsinnig umlaufende Einheit. Dabei ist auf dem Maschinenträger 18 der Generatorläufer 19 des elektrischen Generators 40 angeordnet. Gegenüberliegend und durch den Luftspalt 20 beabstandet befindet sich der Generatorstator 21, der zur Verbesserung der thermischen Anbindung in Anlagekontakt zu einem mittleren Gehäuseteil 22 des Zentralelements 5 steht.

Für das dargestellte Ausführungsbeispiel umfasst das Zentralelement 5 eine erste Haube 23, die mittels der Leitschaufeln der ersten Stufe 7.1, 7.2 gegen das äußere Gehäuse 2 abgestützt sind. Spiegelsymmetrisch angelegt ist eine zweite Haube 24 vorgesehen, die durch die Leitschaufeln der zweiten Stufe 8.1, 8.2, 8.3 nach außen hin abgestützt ist. In der ersten Haube 23 ist ein erstes Axiallager 26.1 und in der zweiten Haube 24 ist ein zweites Axiallager 26.2 vorgesehen, die der axialen Abstützung der umlaufenden Einheit dienen. Für die radiale Lagerung sind an der ersten Haube 23, dem mittleren Gehäuseteil 22 und der zweiten Haube 24 das erste Radiallager 25.1, das zweite Radiallager 25.2, das dritte Radiallager 25.3 und das vierte Radiallager 25.4 angeordnet. Die genannten Lager können als Wälzlager mit Verlustschmierung ausgeführt sein, bevorzugt wird jedoch die Lagerung mittels wassergeschmierter Gleitlager realisiert, wobei für eine bevorzugte Ausführung auf Wellendichtungen verzichtet wird und Lagerbereich sowie der Luftspalt 20 des elektrischen Generators 40 geflutet sind. Hierzu sind die Komponenten des Generatorläufers 19 und des Generatorstators 21 durch eine Vergussmasse oder ein Spaltrohr wassergeschützt ausgeführt.

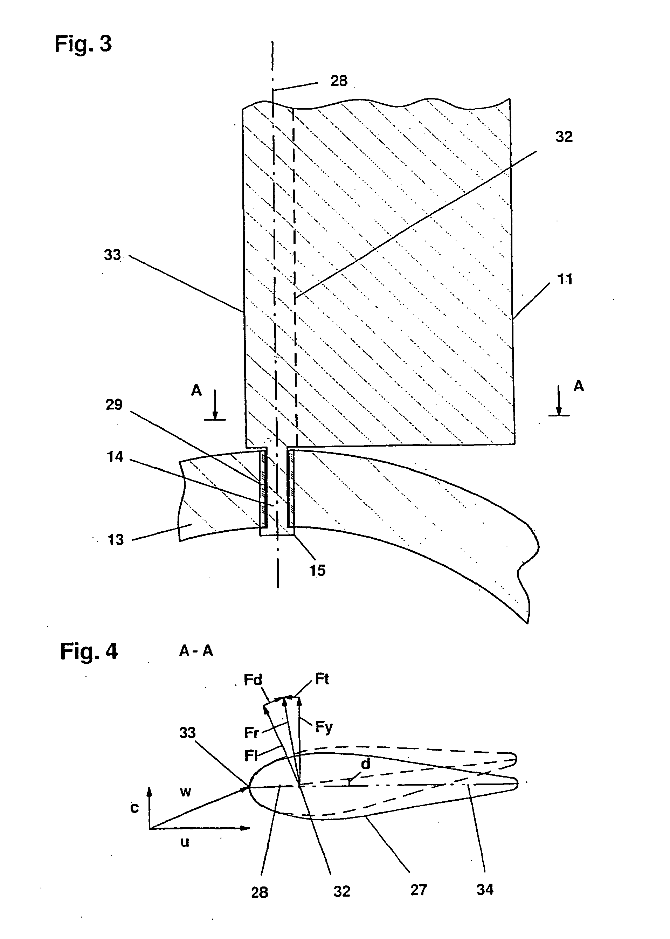

Figur 3 zeigt einen exemplarischen Axialschnitt durch ein Turbinenblatt 11, der in die Rotationsebene gelegt ist. Dargestellt ist die Neutralstellung des Turbinenblatts 11, die sich auch aus dem in Figur 4 gezeigten Schnitt A-A als durchgezogenes Profil 27 ergibt. Aus Figur 3 ist ferner die Schwenkachse 28 ersichtlich, die aufgrund der drehbaren Anlenkung durch den Achsstutzen 14 an der Nabe 13 festgelegt wird. Die Aufnahmeöffnung für den Achsstutzen 14 in der Nabe 13 ist mittels einer Lagerhülse 29 ausgekleidet, so dass sich das Turbinenblatt 11 bezüglich seines Anstellwinkels gegen die Rotationsebene im Betrieb frei in Abhängigkeit des aufschwenkenden Moments und der rückführenden Momente einstellt. Dabei liegt die Schwenkachse 28 zwischen der Auffädellinie der hydrodynamischen Zentren 32 und der angeströmten Profilnase 33.

Aus dem Profilschnitt A-A in Figur 4 ist ersichtlich, dass sich für die Anströmungsgeschwindigkeit c und die negative Umfangsgeschwindigkeit u eine effektive Anströmung w ergibt, die im hydrodynamischen Zentrum 32 zu einer Auftriebskraft Fₗ und zu einer Bremskraft F_{d} führt. Die resultierende Kraft Fᵣ lässt sich vektoriell in eine tangentiale Kraftkomponente Fₜ parallel zur Profilsehne 34 und eine hierzu senkrechte Querkraft F_{y} zerlegen. Aufgrund der erfindungsgemäßen Anordnung der Schwenkachse 28 folgt ein aufschwenkendes Moments, das durch die Fliehkraftwirkung am Turbinenblatt sowie eventuell durch zusätzliche rückstellende Momente erzeugende Maßnahmen, wie ein Rückstellsystem im Fuß des Turbinenblatts 11, ausbalanciert wird. Dabei illustriert das in Figur 4 gestrichelt gezeigte Profil die sich für die vorliegende Momentenbalance ergebende, aus der Rotationsebene aufgeschwenkte Stellung. Vorliegend wird der Aufschwenkwinkel d als Winkel zwischen der Profilsehne 34 und der Rotationsebene definiert.

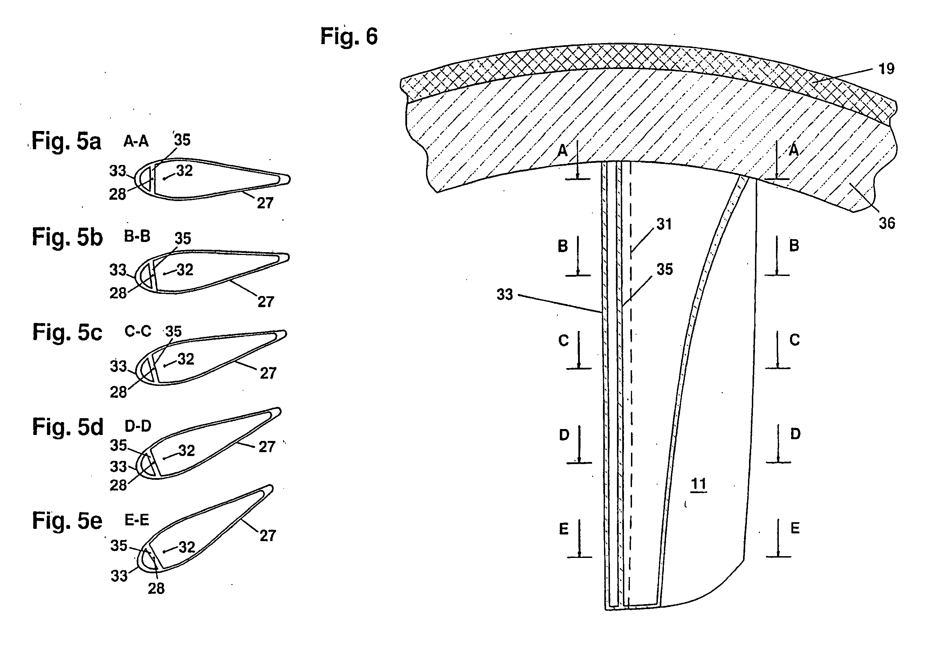

In den Figuren 5a - 5e und 6 ist eine erfindungsgemäße Ausgestaltung dargestellt, die neben den vorliegenden Wasserturbinen eines Gezeitenkraftwerks besonders vorteilhaft zur Ausbildung einer Luftturbine eines OWC-Wellenkraftwerks eingesetzt werden kann. Dabei ist der passive Blattwinkelverstellmechanismus so angelegt, dass für das Turbinenblatt 11 beim Betrieb im radial äußeren Bereich ein kleinerer Ausschwenkwinkel d aus der Rotationsebene heraus im Vergleich zu den radial inneren Bereichen entsteht. Eine mögliche Ausgestaltung besteht darin, ein torsionselastisches Profil 27 vorzusehen, das im Inneren zwischen der angeströmten Profilnase 33 und dem hydrodynamischen Zentrum 32 eine Aussteifung 35 aufweist, die eine Torsionsachse festlegt. Entsprechend der in der vorliegenden Anmeldung verwendeten Terminologie wird diese im Folgenden als Schwenkachse 28 bezeichnet. Wird ein solchermaßen gestaltetes Turbinenblatt 11 an einem äußeren Tragring 36 befestigt, wird der Aufschwenkwinkel d mit zunehmendem Abstand in Radialrichtung vom äußeren Tragring 36 zunehmen. Dies ist anhand der Profilschnitte A-A bis E-E in den Figuren 5a - 4e ersichtlich. Durch diese Maßnahme kann im radial inneren Bereich mit verringerter Umfangsgeschwindigkeit ein größerer Aufschwenkwinkel realisiert werden. Vereinfachend wird angenommen, dass die Schwenkachse geradlinig verläuft. Es sind jedoch Ausgestaltungen mit sichelförmigen Rotorblättern denkbar, so dass ein erfindungsgemäßer passiver Blattwinkelverstellmechanismus auch mit einer krummlinigen Schwenkachse 28 ausgeführt sein kann. Ferner besteht insbesondere für torsionselastische Ausgestaltungen die Möglichkeit, dass durch die Belastungen beim Anlagenbetrieb die Schwenkachse vom geradlinigen Verlauf abweicht.

Des Weiteren ist für die in Figur 6 gezeigte Ausführungsform am äußeren Tragring 36 ein Generatorläufer 19 vorgesehen. Ferner kann die gesamte Lagerung der umlaufenden Einheit auf einem großen Außenradius realisiert werden, so dass keine Notwendigkeit besteht, ein Zentralelement 5 entsprechend der vorausgehenden Ausführungsbeispiele vorzusehen

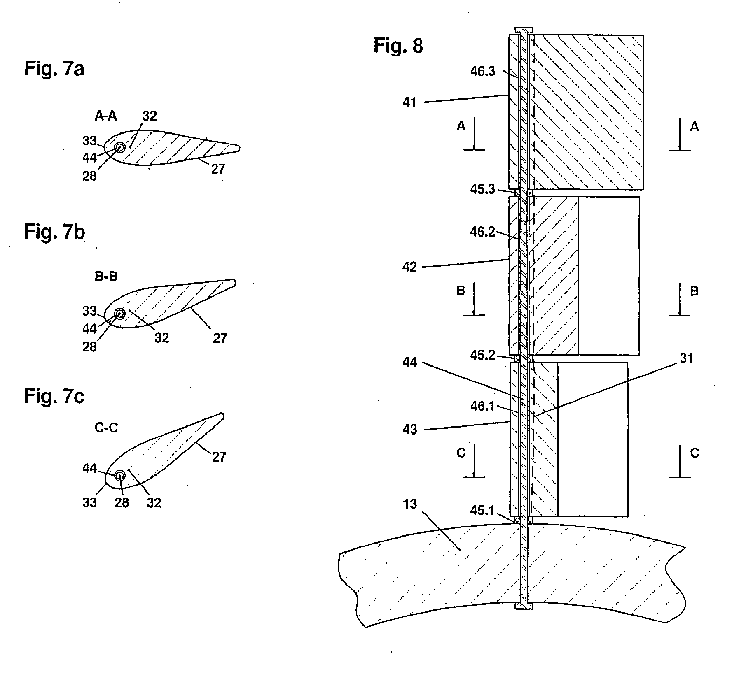

In den Figuren 7a- 7c und 8 ist eine weitere Ausgestaltungsalternative eines passiven Blattwinkelverstellmechanismus gezeigt, die ein stärkeres Aufschwenken im radial inneren Bereich des Turbinenblatts ermöglicht. Hierzu ist das in Figur 8 als Schnitt durch die Rotationsebene gezeigte Turbinenblatt segmentiert ausgebildet. Vorliegend wird eine dreiteilige Struktur mit einem ersten Segment 41, einem zweiten Segment 42 und einem dritten Segment 43 verwendet. Jedes Segment 41, 42, 43 kann eine Drehbewegung um einen von der Nabe 13 ausgehenden Drehzapfen 44 ausführen. Hierzu ist in jedem Segment 41, 42, 43 eine Durchgangsöffnung vorgesehen, in der jeweils eine Lagerhülse 46.1, 46.2, 46.3 aus einem Gleitlagerwerkstoff angeordnet ist. Ferner sind zwischen den einzelnen Segmenten 41, 42, 43 Distanzstücke angeordnet.

Dabei ist es möglich, die Relativbewegung der Distanzstücke 41, 42, 43 durch Anschlagsvorrichtungen zu begrenzen. Für die vorliegende Ausgestaltung wird hierauf verzichtet, so dass sich der Schwenkwinkel für jedes einzelne Segment 41, 42, 43 des Turbinenblatts unabhängig von den Nachbarsegmenten einstellt, wobei aufgrund der höheren Umfangsgeschwindigkeit die Fliehkraftwirkung auf die radial äußeren Segmente größer ist als auf die radial inneren, so dass diese im Vergleich zu den innenliegenden Segmenten kleinere Aufschwenkwinkel aufweisen.

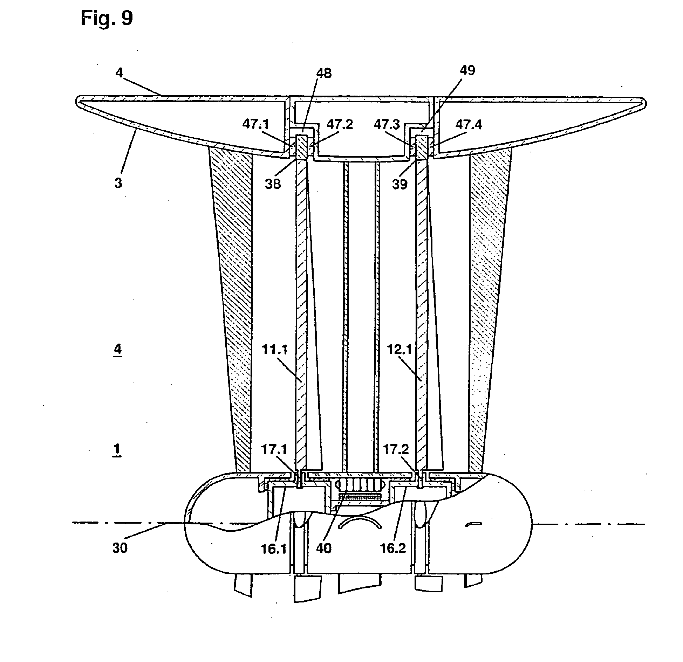

Figur 9 zeigt eine Ausführungsform eines erfindungsgemäßen Unterwasserkraftwerks anhand einer Teilschnittansicht für eine zweistufige Turbinenanordnung. Dabei werden die Turbinenblätter der ersten Stufe 11.1, 11.2, 11.3 sowie die Turbinenblätter der zweiten Stufe 12.1, 12.2, 12.3 im Bereich der ersten Nabe 13 und der zweiten Nabe 16 drehbar angelenkt und torsionselastisch ausgebildet. Radial außen sind die Turbinenblätter 11.1, 11.2, 11.3, 12.1, 12.2, 12.3 der jeweiligen Stufe drehstarr an einem ersten Außenring 38 und einem zweiten Außenring 39 befestigt. Hierdurch fluchtet das Profil des jeweiligen Turbinenblatts radial außen mit der Rotationsebene, während radial innen ein Aufschwenken möglich ist. Der erste Außenring 38 läuft in einer ersten Nut 48 im äußeren Gehäuse und wird durch die Lagerkomponenten 47.1, 47.2 abgestützt. Entsprechend ist für den zweiten Außenring 39 eine zweite Nut 49 mit den Lagerkomponenten 47.3, 47.4 vorgesehen. Ferner kann die vorliegende Ausführung auf die Luftturbine eines Wellenkraftwerks übertragen werden.

Um für die aktuell vorliegende Strömung eine geeignete Turbinenumlaufgeschwindigkeit und damit einen bestimmten Aufschwenkwinkel d einstellen zu können, wird bevorzugt ein Drehzahl- oder Momentenführung der Turbine durch den direkt gekoppelten Generator 40 bewirkt. Dabei wird zur Stellgrößenfestlegung, vorliegend des Lastmoments am elektrischen Generator 40, ein Suchalgorithmus auf der Grundlage eines MPP-Reglers verwendet.

Eine Weitergestaltung im Rahmen des fachmännischen Könnens ist möglich, dabei können insbesondere torsionselastische Turbinenblätter an einem Außenund einem Innenring drehbar angelenkt werden, wobei durch unterschiedlich eingestellte Anschläge der maximale Aufschwenkwinkel radial innen größer als radial außen ist. Des Weiteren können die Anordnung der Generatorkomponenten und die zugehörige Lagerung radial außen oder radial innen erfolgen. Ferner besteht die Möglichkeit, den Leitapparat wenigstens teilbeweglich auszubilden, so dass eine weitere Anpassungsmöglichkeit an die Richtung und die Geschwindigkeit der Anströmung besteht.

### Bezugszeichenliste

- 1: Unterwasserkraftwerk
- 2: äußeres Gehäuse
- 3: Innenwand
- 4: Strömungskanal
- 5: Zentralelement
- 6.1: erste Turbinenstufe
- 6.2: zweite Turbinenstufe
- 7.1, 7.2: Leitschaufel der ersten Stufe
- 8.1, 8.2, 8.3: Leitschaufel der zweiten Stufe
- 9.1, 9.2, 9.3: zentraler Leitapparat
- 10: Stützstruktur
- 11: Turbinenblatt
- 11.1, 11.2, 11.3: Turbinenblatt der ersten Stufe
- 12.1, 12.2, 12.3: Turbinenblatt der zweiten Stufe
- 13: Nabe
- 14: Achsstutzen
- 15: Verriegelungselement
- 16.1: erste Nabe
- 16.2: zweite Nabe
- 17.1: erster Achsstutzen
- 17.2: zweiter Achsstutzen
- 18: Maschinenträger
- 19: Generatorläufer
- 20: Luftspalt
- 21: Generatorstator
- 22: mittleres Gehäuseteil
- 23: erste Haube
- 24: zweite Haube
- 25.1: erstes Radiallager
- 25.2: zweites Radiallager
- 25.3: drittes Radiallager
- 25.4: viertes Radiallager
- 26.1: erstes Axiallager
- 26.2: zweites Axiallager
- 27: Profil
- 28: Schwenkachse
- 29: Lagerhülse
- 30: Rotationsachse
- 31: Auffädellinie der hydrodynamischen Zentren
- 32: hydrodynamisches Zentrum
- 33: angeströmte Profilnase
- 34: Profilsehne
- 35: Aussteifung
- 36: äußerer Tragring
- 37: Achsstutzen
- 38: erster Außenring
- 39: zweiter Außenring
- 40: elektrischer Generator
- 41: erstes Segment
- 42: zweites Segment
- 43: drittes Segment
- 44: viertes Segment
- 45.1,45.2 45.3, 45.4: Distanzstück
- 46.1, 46.2, 46.3: Lagerhülse
- 47.1, 47.2 47.3, 47.4: Lagerkomponente
- 48: erste Nut
- 49: zweite Nut

- c: Anströmungsgeschwindigkeit
- d: Aufschwenkwinkel
- u: negative Umfangsgeschwindigkeit
- w: effektive Anströmung
- Fₗ: Auftriebskraft
- F_{d}: Bremskraft
- Fᵣ: resultierende Kraft
- Fₜ: tangentiale Kraftkomponente
- F_{y}: Querkraft

## Patentansprüche

1. Unterwasserkraftwerk umfassend
1.1 einen elektrischen Generator (40);
1.2 eine bidirektional anströmbare, gleichsinnig umlaufende Wasserturbine mit einer Vielzahl von Turbinenblättern (11), die über wenigstens einen Teil Ihrer Längserstreckung ein tropfenförmiges Profil aufweisen; und wobei die Wasserturbine einen passiven Blattwinkelverstellmechanismus für die Turbinenblätter (11) umfasst; **dadurch gekennzeichnet, dass**
der Blattwinkelverstellmechanismus
1.3 einen radiusabhängigen Aufschwenkwinkel (d) bewirkt, wobei: der Aufschwenkwinkel (d) in den radial äußeren Bereichen des Turbinenblatts kleiner ist im Vergleich zu den radial inneren Bereichen, und wobei jedem Turbinenblatt (11) eine Schwenkachse (28) zugeordnet ist, die zwischen der angeströmten Profilnase (33) und der Auffädellinie der hydrodynamischen Zentren (31) liegt.

2. Unterwasserkraftwerk nach Anspruch 1, **dadurch gekennzeichnet, dass** wenigstens ein Teil der Turbinenblätter in einzelne, sich radial erstreckende Segmente (41, 42, 43, 44) unterteilt ist.

3. Unterwasserkraftwerk nach einem der Ansprüche 1 oder 2, **dadurch gekennzeichnet, dass** die Turbinenblätter torsionselastisch ausgebildet sind und von einem äußeren Tragring (36) nach radial innen gerichtet sind.

4. Unterwasserkraftwerk nach einem der Ansprüche 1 - 3, **dadurch gekennzeichnet, dass** die Turbinenblätter an einem Außenring (38, 39) drehstarr befestigt sind und an einer hierzu radial innen liegenden Nabe (30) schwenkbar angelenkt sind.

5. Luftturbine mit einer Vielzahl von Turbinenblättern (11), die über wenigstens einen Teil ihrer Längserstreckung ein tropfenförmiges Profil aufweisen, wobei die Luftturbine bei bidirektionaler Anströmung gleichsinnig umläuft; und wobei die Lufturbine einen passiven Blattwinkelverstellmechanismus für die Turbinenblätter (11) umfasst, wobei jedem Turbinenblatt (11) eine Schwenkachse (28) zugeordnet ist, die zwischen der angeströmten Profilnase (33) und der Auffädellinie der aerodynamischen Zentren (31) liegt;
**dadurch gekennzeichnet, dass**
im Betrieb der Aufschwenkwinkel (d) in den radial äußeren Bereichen des Turbinenblatts kleiner ist im Vergleich zu den radial inneren Bereichen.

6. Luftturbine nach Anspruch 5, **dadurch gekennzeichnet, dass** die Turbinenblätter torsionselastisch ausgebildet sind und von einem äußeren Tragring (36) nach radial innen gerichtet sind oder an einem Außenring (38, 39) drehstarr befestigt sind und an einer hierzu radial innen liegenden Nabe (30) schwenkbar angelenkt sind.

7. Luftturbine nach einem der Ansprüche 5 oder 6, **dadurch gekennzeichnet, dass** wenigstens ein Teil der Turbinenblätter in einzelne, sich radial erstreckende Segmente (41, 42, 43, 44) unterteilt ist.

## Claims

1. An underwater power plant comprising
1.1 an electric generator (40);
1.2 a water turbine with bidirectional fluid flow and unidirectional rotation with a plurality of turbine blades (11), having a teardrop-shaped profile over at least a portion of their longitudinal extension; and whereas the water turbine includes a passive mechanism to control the pitch angle of the blades of the turbine (11),
1.3 **characterised in that** the mechanism to control the pitch angle of the blades
1.4 causes a small radius related swivel-open angle (d), whereas the swivel-open angle (d) in the radially external regions of the turbine blade is smaller compared to the radially internal regions,
and whereas each turbine blade (11) is associated a swivel axis (28), which is situated between the inflow profile nose (33) and the threading line of the hydrodynamic centres (31).

2. An underwater power plant according to claim 1, **characterised in that** least a portion of the turbine blades is divided into individual segments (41, 42, 43, 44) extending radially.

3. An underwater power plant according to one of claims 1 or 2, **characterised in that** the turbine blades are torsion elastic and are directed radially and inwardly from an external supporting ring (36).

4. An underwater power plant according to one of claims 1 to 3, **characterised in that** the turbine blades are secured in a torsionally rigid manner to an outer ring (38, 39) and are hinged in a swivel fashion to a hub (30) lying radially and inwardly with respect thereto.

5. An air turbine with a plurality of turbine blades (11), having a teardrop-shaped profile over at least a portion of their longitudinal extension, whereas the air turbine rotates in the same direction in the presence of a bidirectional inflow; and whereas the air turbine includes a passive mechanism to control the pitch angle of the blades of the turbine (11), and whereas each turbine blade (11) is associated a swivel axis (28), which is situated between the inflow profile nose (33) and the threading line of the hydrodynamic centres (31); **characterised in that** during operation, the swivel-open angle (d) in the radially external regions of the turbine blade is smaller compared to the radially internal regions.

6. An air turbine according to claim 5, **characterised in that** the turbine blades are torsion elastic and are directed radially and inwardly from an external supporting ring (36) or are secured in a torsionally rigid manner to an outer ring (38, 39) and are hinged in a swivel fashion to a hub (30) lying radially and inwardly with respect thereto.

7. An air turbine according to one of claims 5 or 6, **characterised in that** least a portion of the turbine blades is divided into individual segments (41, 42, 43, 44) extending radially.

## Revendications

1. Centrale immergée comprenant
1.1 un générateur électrique (40);
1.2 une turbine à eau tournant dans le même sens et exposée à un écoulement bidirectionnel, possédant une pluralité de pales de turbine (11), lesquelles présentent un profil en forme de goutte sur au moins une partie de leur étendue longitudinale et où la turbine à eau comprend un mécanisme passif de réglage d'angle de calage de pale pour les pales de turbine (11),
1.3 **caractérisée en ce que** le mécanisme de réglage d'angle de calage de pale
1.4 provoque un petit angle d'ouverture par pivotement en fonction du rayon (d), où l'angle d'ouverture par pivotement (d) dans les zones radialement externes de la pale de turbine est plus petit que dans les zones radialement internes,
et où un axe de pivotement (28) est associé à chaque pale de turbine (11), axe situé entre le bord d'attaque (33) balayé par le flux et la ligne d'empilage des centres hydrodynamiques (31).

2. Centrale immergée selon la revendication 1, **caractérisée en ce qu'**au moins une partie des pales de turbine est divisée en segments (41, 42, 43, 44) individuels s'étendant radialement.

3. Centrale immergée selon l'une quelconque des revendications 1 ou 2, **caractérisée en ce que** les pales de turbine sont élastiques en torsion et sont dirigées radialement vers l'intérieur à partir d'une bague porteuse externe (36).

4. Centrale immergée selon l'une quelconque des revendications 1 à 3, **caractérisée en ce que** les pales de turbine sont fixées en rotation au niveau d'une bague externe (38, 39) et sont articulées de manière pivotante sur un moyeu (30) agencé radialement à l'intérieur par rapport à celle-ci.

5. Turbine à air possédant une pluralité de pales de turbine (11), qui présentent un profil en forme de goutte sur au moins une partie de leur étendue longitudinale, où la turbine à air tourne dans le même sens en présence d'un balayage bidirectionnel; et où la turbine à air comprend un mécanisme passif de réglage d'angle de calage de pale pour les pales de turbine (11), où un axe de pivotement (28) est associé à chaque pale de turbine (11), axe situé entre le bord d'attaque (33) balayé par le flux et la ligne d'empilage des centres hydrodynamiques (31); **caractérisée en ce que** pendant l'exploitation, l'angle d'ouverture par pivotement (d) dans les zones radialement externes de la pale de turbine est plus petit que dans les zones radialement internes.

6. Turbine à air (1) selon la revendication 1, **caractérisée en ce que** les pales de turbine sont élastiques en torsion et sont dirigées radialement vers l'intérieur à partir d'une bague porteuse externe (36) ou sont fixées en rotation au niveau d'une bague externe (38, 39) et sont articulées de manière pivotante sur un moyeu (30) agencé radialement à l'intérieur par rapport à celle-ci.

7. Turbine à air selon l'une quelconque des revendications 5 ou 6, **caractérisée en ce qu'**au moins une partie des pales de turbine est divisée en segments (41, 42, 43, 44) individuels s'étendant radialement.
